# EUROPÄISCHE PATENTSCHRIFT

(11) **EP 1 108 640 B1**
(45) Veröffentlichungstag und Bekanntmachung des Hinweises auf die Patenterteilung: **30.08.2006**
(21) Anmeldenummer: 00124265.0
(22) Anmeldetag: 13.11.2000
(51) Int. Cl.: B62D 25/06

(54) **Dachbefestigung an Kraftfahrzeugen**
Roof connection for motor cars
Fixation de toiture de véhicules automobiles

(30) Priorität: 17.12.1999 DE 19960784
(43) Veröffentlichungstag der Anmeldung: 20.06.2001
(73) Patentinhaber: Volkswagen Aktiengesellschaft, 38436 Wolfsburg (DE)
(72) Erfinder: Morsch, Klaus-Dieter, 38124 Braunschweig (DE)

(56) Entgegenhaltungen:
- DE-A- 19 716 553
- US-A- 4 059 303

## Beschreibung

Die vorliegende Erfindung betrifft eine Dachbefestigung an Kraftfahrzeugen, wobei obere Karosserieabschnitte als seitliche, hohlprofilartige Dachlängsholme ausgebildet sind und an diesen eine die Karosserie nach oben abschließende Dachplatte befestigt ist. Die Dachlängsholme bestehen aus miteinander fest verbundenen, unteren und oberen Stahlblechen, wobei das jeweils untere Stahlblech der Dachlängsholme einen ersten ebenen Abschnitt, der in die seitlichen, im wesentlichen vertikal verlaufenden Karosserieabschnitte mündet, einen zweiten nach innen ausgebauchten Abschnitt und einen dritten ebenen Abschnitt umfaßt, und wobei das jeweils obere Stahlblech der Dachlängsholme einen ersten ebenen Abschnitt, der mit dem ersten ebenen Abschnitt des unteren Stahlblechs verbunden ist, einen zweiten nach außen ausgebauchten Abschnitt, der dem zweiten ausgebauchten Abschnitt des unteren Stahlblechs gegenüberliegt und mit diesem den Hohlraum des Dachlängsholms bildet, und einen dritten ebenen Abschnitt, der mit dem dritten ebenen Abschnitt des unteren Stahlblechs verbunden ist und mit diesem eine Auflagefläche für die Dachplatte bildetDie Auflagefläche verläuft im wesentlichen waagerecht. An die Auflagefläche grenzt eine im wesentlichen lotrechte Wandung des zweiten Abschnitts des oberen Stahlblechs an. Die Dachplatte ist in die aus dieser Auflagefläche und dieser lotrechten Wandung gebildete L-förmige Schiene eingesetzt, ohne diese lotrechte Wandung nach außen seitlich zu überragen.

Es sind verschiedene Möglichkeiten bekannt, eine Dachplatte an der Karosserie eines Kraftfahrzeugs zu befestigen. Häufig werden Dachplatten an den seitlichen Dachholmen durch Punktschweißen befestigt, wobei zumeist eine Dachrinne ausgebildet wird, die in einem sich anschließenden Verfahrensschritt durch zusätzliche Abdeckungsetemente verschlossen werden muß.

Eine Dachbefestigung an Kraftfahrzeugen ist aus der DE 40 24 837 A1 bekannt, die ein Verfahren zur Herstellung eines Fahrzeugdachs mit einem Schiebedachausschnitt beschreibt. Gemäß diesem Verfahren wird eine Dachhaut zusammen mit einem daran verklebten Schiebedach-Verstärkungsrahmen durch eine Klebeverbindung mit dem Dachholm verbunden. Diese Dachhaut wird in vorangegangenen, relativ aufwendigen Verfahrensschritten mit dem Schiebedach-Verstärkungsrahmen ausgerüstet. Die seitlichen Dachholme und die Dachhaut sind so konstruiert, daß ein konkav gewölbter Randbereich der Dachhaut den jeweiligen Dachholm umgreift, wobei dieser gewölbte Randbereich in einem abgewinkelten Randflansch endet, der an einem unterem Randflansch des Dachholms durch Punktverschweißung befestigt werden muß. Zur Herstellung der gewünschten Verbindung zwischen Dachhaut und Karosserie ist somit sowohl eine Klebeverbindung im oberen Bereich des Dachholms als auch eine Schweißverbindung im unteren Bereich des Dachholms erforderlich. Außerdem muß die Wölbung des konkaven Randbereichs der Dachhaut mit relativ hoher Genauigkeit an die Form des Dachholms angepaßt werden um definierte Auflagepunkte zur Durchführung der Punktverschweißung zu erhalten. Dies bereitet bei einer aus relativ dünnem Blech bestehenden Dachhaut bekanntermaßen Schwierigkeiten. Ein weiterer. Nachteil dieser bekannten Verbindung besteht in der notwendigen Formgebung der Dachhaut im Bereich der herzustellenden Klebeverbindung, die in der Regel eine nachfolgende Abdeckung der ausgebildeten Sicke; beispielsweise mit einer Dachleiste, erforderlich macht. Da die Verbindung zwischen der Dachhaut und der Karosserie nach dem bekannten Verfahren auch durch eine Punktverschweißung hergestellt wird, müssen Karosserie und Dachhaut im wesentlichen aus denselben Materialien bestehen. Sofern sich diese Materialien deutlich voneinander unterscheiden und/oder beispielsweise Leichtmetalle eingesetzt werden sollen, würde sich der Aufwand zur Herstellung der Schweißverbindung unvertretbar hoch gestauten.

Aus der DE 197 16 553 A1 ist eine gattungsgemäße Dachbefestigung mit einem zwischen einem Dachlängsholm und einem Dachblech verlaufenden Dachkanal bekannt, wobei Dachlängsholm und Dachblech aus unterschiedlichen Werkstoffen hergestellt sind und einander übergreifende Auflageflansche aufweisen. Der hohlprofilartige Dachlängsholm besteht aus zwei fest miteinander verbundenen Stahlblechen, deren einer Verbindungsabschnitt den Auflageflansch für das Dachblech bildet. Zwischen den Auflageflanschen von Dachlängsholm und Dachblech ist ein Zwischenstück eingefügt, das aus dem Werkstoff des mit dem außenseitigen Auflageflansch versehenen Dachblechs besteht. Das Zwischenstück kann mit dem innenliegenden Auflageflansch des Dachlängsholms verklebt und/oder mechanisch verbunden und mit dem außenseitigen Auflageflansch des Dachblechs durch Laserstrahlschweißung verbunden seien.

Ein Verfahren zum Herstellen eines Zusammenbaus durch Kleben insbesondere im Kraftfahrzeug-Karosseriebau ist in der DE 26 20 029 A1 beschrieben. Dieses Verfahren ist auch im Bereich von Fahrzeugdächern, bespielsweise von Dachspriegel und Dach oder Schiebedachrahmen und Dach anwendbar.

Ein Fahrzeugdach von innen mit dem Dachrahmen einer Fahrzeug-Karosserie zu verbinden, ist aus der DE 37 25 807 A1 bekannt.

Eine Aufgabe der vorliegenden Erfindung besteht somit darin, die Nachteile der aus dem Stand der Technik bekannten Lösungen zu vermeiden und eine Dachbefestigung bereitzustellen, die eine einfache und schnelle Montage einer Dachplatte in der Karosserie ermöglicht. Außerdem soll sichergestellt werden, daß die Dachbefestigung auch eine Mischbauweise hinsichtlich der Materialien der Dachplatte und der Karosserie zuläßt. Insbesondere wird angestrebt, eine aus Aluminium oder auch anderen Leichtmetallen bestehende Dachplatte in der Karosserie zu befestigen.

Diese und weitere Aufgaben werden durch eine erfindungsgemäße Dachbefestigung gelöst, bei der die Dachplatte eine Seitenwandung aufweiset, an welche sich ein im wesentlichen waagerecht verlaufender und nach innen abgestellter Abschnitt anschließt, der seinerseits mit der durch die Abschnittes gebildeten Auflagefläche korrespondiert, wobei die Dachplatte über ihren nach innen abgestellten Abschnitt mit der Auflagefläche und/oder über ihre Seitenwandung mit der lotrechten Wandung verklebt ist.

Diese Gestaltung der Dachbefestigung bietet den Vorteil, daß die Dachplatte ohne weitere Montagehilfsmittel und mit einem geringen Aufwand an Justierung in die L-förmige Schiene, die am Dachholm ausgebildet ist, eingesetzt und dort befestigt werden kann. Da die Dachplatte den Dachholm nach außen nicht überragt und an der Außenseite des Dachholms keine zusätzliche Befestigung erforderlich ist, entfallen die bekannten Toleranzprobleme an Biegebereichen herkömmlicher Dachplatten. Das Verkleben der Dachplatte mit dem Dachholm ermöglicht eine Mischbauweise der Karosserie unter Verwendung verschiedener Werkstoffe, was beispielsweise bei Schweißverbindungen nicht oder nur mit unverhältnismäßig großem Aufwand herstellbar wäre.

Bei einer bevorzugten Ausführungsform ist die Dachplatte einstückig ausgebildet und besteht aus einem Leichtmetall, insbesondere aus Aluminium. Durch Herstellung der Dachplatte aus Leichtmetall kann das Gewicht des Kraftfahrzeugs erheblich reduziert werden.

Besonders vorleilhaft ist es, wenn die Seitenwandungen der Dachplatte nur durch einen mit einer Klebemasse verfüllten Klebespalt von der lotrechten Wandung beabstandet sind. Beispielsweise kann der Klebespalt 3 mm breit sein. Dies bietet den Vorteil, daß eine Dachrinne nicht mehr vorhanden ist, da der Klebespalt vollständig von der Klebemasse ausgefüllt wird. Eine zusätzliche Abdeckung der bei herkömmlichen Dachbefestigungen bestehenden Dachrinne ist somit nicht mehr erforderlich.

Eine weitergebildete Ausführungsform zeichnet sich dadurch aus, daß die zwischen den seitlichen Dachlängsholmen und in einer Ebene mit diesen verlaufenden Karosserieabschnitte als Dachquerholme in gleicher Weise wie die Dachlängsholme ausgebildet sind und ebenfalls Auflageflächen und lotrechte Wandungen zur Befestigung der Dachplatte aufweisen. Damit kann die Dachplatte umlaufend befestigt werden, wodurch zusätzliche Abdeckungsmaßnahmen an den Dachquerholmen eingespart und die Festigkeit der Konstruktion erhöht werden.

Bei einer abgewandelten vorteilhaften Ausführungsform überragt die Dachplatte die lotrechte Wandung des oberen Stahlblechs auch in der Höhe nicht. Wenn gleichzeitig der Klebespalt zwischen lotrechter Wandung und Seitenwand der Dachplatte klein gehalten wird, ergibt sich eine äußerst ebene obere Karosserieoberfläche, bei der die notwendigen Fügespalten auf ein Mindestmaß begrenzt sind. Dies bietet auch den Vorteil, daß mögliche Angriffspunkte für Korrosion minimiert bzw. ausgeschlossen werden.

Weitere Vorteile, Einzelheiten und Weiterbildungen ergeben sich aus der nachfolgenden Beschreibung bevorzugter Ausführungsformen, unter Bezugnahme auf die Zeichnungen. Es zeigen:
- Fig. 1: eine perspektivische Darstellung eines Kraftfahrzeugs zur prinzipiellen Veranschaulichung einer Dachbefestigung an diesem Kraftfahrzeug;
- Fig. 2: eine geschnittene Detailzeichnung eines Dachholms mit einer Auflagefläche, an welcher die Dachplatte befestigt ist;
- Fig. 3: in einer geschnittenen Detailzeichnung eine abgewandelte Ausführungsform der Befestigung der Dachplatte an dem Dachholm;
- Fig. 4: in einer geschnittenen Detailzeichnung eine nochmals abgewandelte Dachbefestigung an dem Dachholm

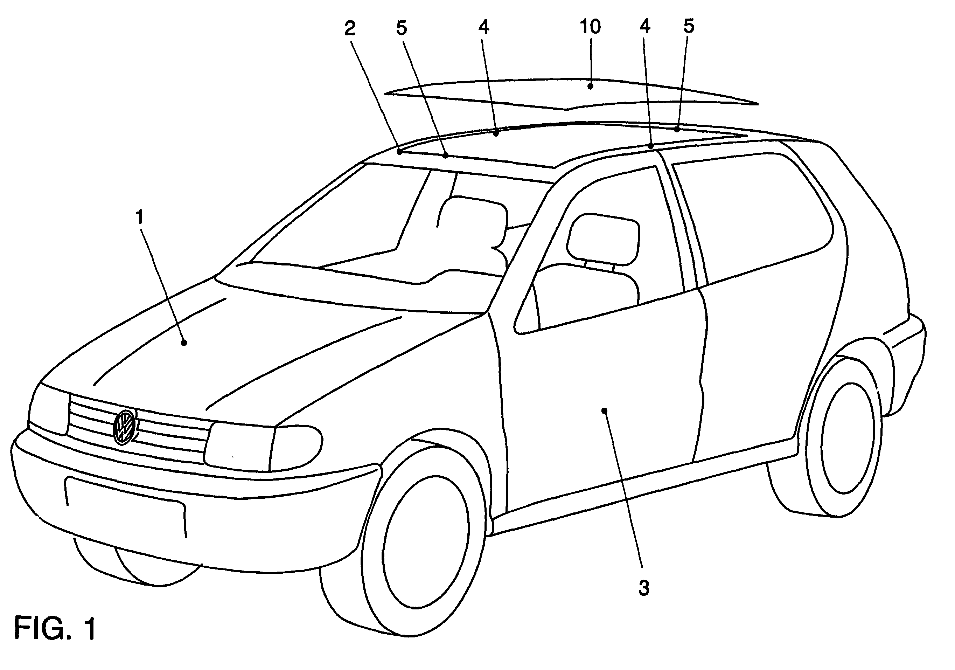

In der Fig. 1 ist in einer perspektivischen Ansicht ein Kraftfahrzeug 1 dargestellt. Das Kraftfahrzeug 1 besitzt unter anderem obere Karosserieabschnitte 2 und seitliche Karosserieabschnitte 3. Teile der oberen Karosserieabschnitte 2 sind als seitliche, hohlprofilartige Dachlängsholme 4 ausgebildet. Je nach Ausführung können auch gleichartig gestaltete Dachquerholme 5 an der vorderen und der hinteren Seite der oberen Karosserieabschnitte vorgesehen sein. Die Karosserie des Kraftfahrzeugs 1 wird oben durch eine Dachplatte 10 verschlossen, die bei der Montage von oben auf die Karosserie aufgesetzt wird, wie dies durch den in Fig. 1 eingezeichneten Pfeil veranschaulicht wird.

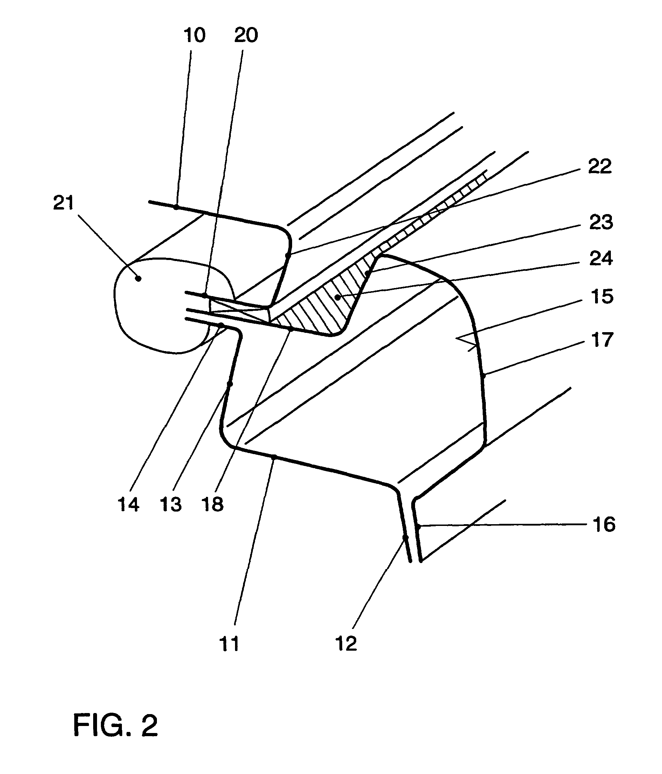

Die in Fig. 2 gezeigte Detailzeichnung stellt eine Schnittansicht durch den Dachlängsholm 4 dar. Eine vergleichbare Ansicht würde sich bei einem entsprechend gestalteten Dachquerholm 5 ergeben. Der Dachholm4 besteht aus einem unteren Stahlblech 11, welches einen ersten ebenen Abschnitt 12 besitzt, der in den seitlichen Karosserieabschnitt 3 mündet. Außerdem weist das untere Stahlblech 11 einen zweiten nach innen ausgebauchten Abschnitt 13 und einen dritten ebenen Abschnitt 14 auf. Der zweite nach innen ausgebauchte Abschnitt 13 kann durch geeignetes Abwinkeln, Tiefziehen oder dergleichen erzeugt werden. Weiterhin besitzt der Dachholm4 ein oberes Stahlblech 15, welches seinerseits einen ersten ebenen Abschnitt 16, einen zweiten nach außen ausgebauchten Abschnitt 17 und einen dritten ebenen Abschnitt 18 umfaßt. Der erste ebene Abschnitt 16 des oberen Stahlblechs 15 ist mit dem ersten ebenen Abschnitt 12 des unteren Stahlblechs 11 beispielsweise durch Verschweißen verbunden. Die sich gegenüberliegenden ausgebauchten Abschnitte 13 und 17 bilden das hohle Profil des Dachholms4. Der dritte ebene Abschnitt 18 des oberen Stahlblechs 15 ist zumindestens abschnittsweise mit dem dritten ebenen Abschnitt 14 des unteren Stahlblechs11 verbunden, beispielsweise durch Punktverschweißen. Die beiden dritten ebenen Abschnitte 14, 18 verlaufen im wesentlichen waagerecht und bilden eine Auflagefläche 20 für die Dachplatte 10. Bei der in Fig. 2 gezeigten Ausführungsform ist die Dachplatte 10 an der Auflagefläche 20 durch eine Klebeverbindung 21 befestigt. Eine Seitenwandung 22 der Dachplatte 10 ist bei der dargestellten Ausführungsform von einer im wesentlichen lotrechten Wandung 23 des zweiten nach außen ausgebauchten Abschnitts 17 des oberen Stahlblechs 15 beabstandet, so daß ein Dachrinnenspalt 24 verbleibt. Der verbleibende Dachrinnenspalt 24 kann durch eine Dachleiste oder andere Abdeckmittel abgedeckt oder im Bedarfsfall beispielsweise zur Befestigung eines Dachgepäckträgers verwendet werden. Vorzugsweise besteht die Dachplatte 10 aus Aluminium oder einem anderen geeigneten Leichtmetall.

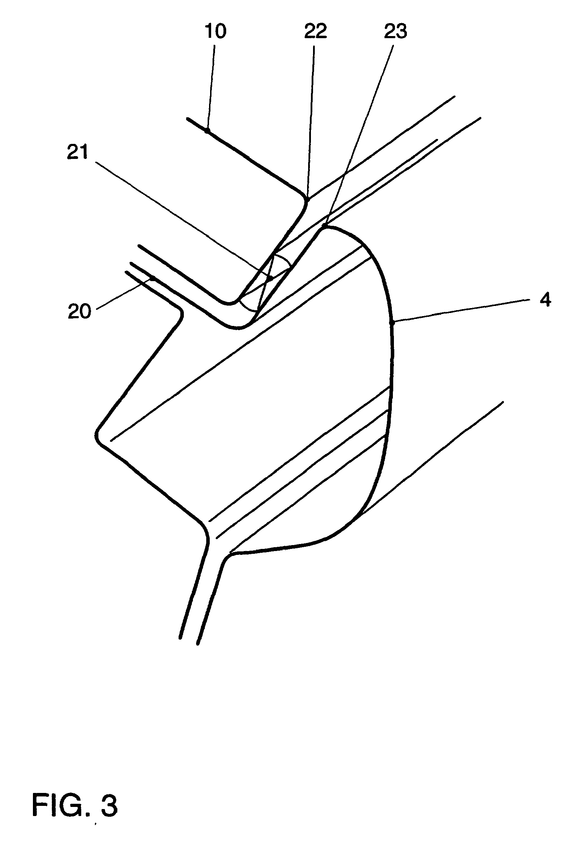

In Fig. 3 ist in einer Detailzeichnung eine abgewandelte Ausführungsform dargestellt. Wiederum ist dabei eine Schnittansicht durch den Dachlängsholm 4 gewählt, wobei die Dachquerholme in vergleichbarer Art und Weise ausgebildet sein können. Die in Fig. 3 gezeigte Ausführungsform unterscheidet sich von der in Fig. 2 dargestellten Ausführungsform vor allem darin, daß die lotrechte Wandung 23 in ihrer Ausrichtung möglichst exakt an die Seitenwandung 22 der Dachptatte 10 angepaßt ist. Bei der Montage wird die Dachplatte 10 möglichst dicht an der lotrechten Wandung 23 angeordnet, so daß sich der Dachrinnenspalt minimiert. Zwischen der Seitenwandung 22 und der lotrechten Wandung 23 wird zur Befestigung der vorzugsweise aus Aluminium bestehenden Dachplatte 10 eine Klebemasse eingebracht, mit der die Klebeverbindung 21 zwischen den sich gegenüberliegenden Wandungen hergestellt wird. Die Auflagefläche 20 kann in diesem Fall verkürzt ausgeführt werden. Nach Bedarf kann sich die Klebeverbindung 21 bis in den Bereich der Auflagefläche 20 erstrecken. Da der verbleibende Spalt zwischen der Seitenwandung 22 und der lotrechten Wandung 23 durch die Klebemasse im wesentlichen vollständig ausgefüllt ist, kann auf zusätzliche Abdeckmittel, wie beispielsweise eine Dachleiste, verzichtet werden

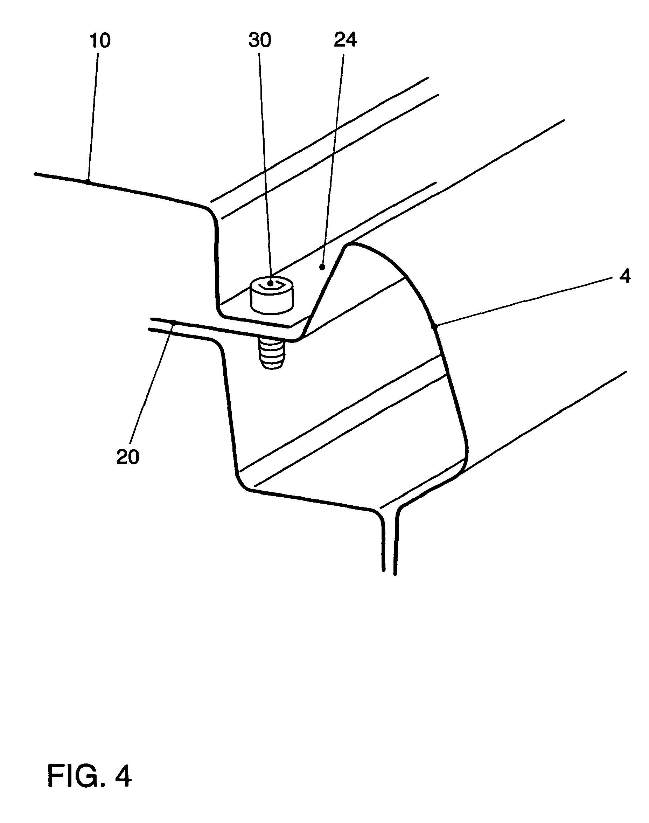

Eine dritte Ausführungsform einer Dachbefestigung ist in einer Detailzeichnung in Fig. 4 dargestellt. Wiederum ist eine Schnittansicht durch den Dachholm 4 gezeigt. Diese Ausführungsform unterscheidet sich von den vorangegangen beschriebenen im wesentlichen durch die Art der Befestigung der Dachplatte 10 an der Auflagefläche 20 Anstelle einer erfindungsgemäßen Klebeverbindung kommt hier eine Befestigung der Dachplatte 10 durch zusätzliche Befestigungselemente 30, beispielsweise Schrauben oder Nieten, zum Einsatz. Es verbleibt wiederum ein Dachrinnenspalt 24, der durch eine Abdeckleiste abgedeckt werden kann. Bei einer derartigen Gestaltung könnte die Dachplatte 10 auch durch Punktschweißen an der Auflagefläche 22 befestigt werden, sofern die Dachplatte 10 ebenfalls aus Stahlblech hergestellt ist.

### BEZUGSZEICHENLISTE

- 1: Kraftfahrzeug
- 2: Obere Karosserieabschnitte
- 3: Seitliche Karosserieabschnitte
- 4: Dachlängsholm
- 5: Dachquerholm

- 10: Dachplatte
- 11: Unteres Stahlblech des Dachholms
- 12: Erster ebener Abschnitt des unteren Stahlblechs
- 13: Zweiter nach innen ausgebauchter Abschnitt des unteren Stahlblechs
- 14: Dritter ebener Abschnitt des unteren Stahlblechs
- 15: Oberes Stahlblech des Dachholms
- 16: Erster ebener Abschnitt des oberen Stahlblechs
- 17: Zweiter nach außen ausgebauchter Abschnitt des oberen Stahlblechs
- 18: Dritter ebener Abschnitt des oberen Stahlblechs

- 20: Auflagefläche
- 21: Klebeverbindung
- 22: Seitenwandung der Dachplatte
- 23: Lotrechte Wandung des zweiten nach außen ausgebauten Abschnitts
- 24: Dachrinnenspalt

- 30: Befestigungselemente

## Patentansprüche

1. Dachbefestigung an Kraftfahrzeugen (1), wobei obere Karosserieabschnitte (2) als seitliche, hohlprofilartige Dachlängsholme (4) ausgebildet sind, die aus miteinander fest verbunden, unteren und oberen Stahlblechen bestehen, das jeweils untere Stahlblech (11) der Dachlängsholme einen ersten ebenen Abschnitt (12), der in die seitlichen, im wesentlichen vertikal verlaufenden Karosserieabschnitte (3) mündet, einen zweiten nach innen ausgebauchten Abschnitt (13) und einen dritten ebenen Abschnitt (14) umfaßt, das jeweils obere Stahlblech (15) der Dachlängsholme einen ersten ebenen Abschnitt (16), der mit dem ersten ebenen Abschnitt (12) des unteren Stahlblechs verbunden ist, einen zweiten nach außen ausgebauchten Abschnitt (17), der dem zweiten ausgebauchten Abschnitt (13) des unteren Stahlblechs gegenüberliegt und mit diesem den Hohlraum des Dachlängsholms (4) bildet, und einen dritten ebenen Abschnitt (18), der mit dem dritten ebenen Abschnitt (14) des unteren Stahlblechs verbunden ist und mit diesem eine Auflagefläche (20) für eine die Karosserie nach oben abschließende Dachplatte (10) bildet, die Auflagefläche (20) im wesentlichen waagerecht verläuft, an die Auflagefläche (20) eine im wesentlichen lotrechte Wandung (23) des zweiten Abschnitts (17) des oberen Stahlblechs angrenzt und die Dachplatte (10) in die aus dieser Auflagefläche (20) und dieser lotrechten Wandung (23) gebildete L-förmige Schiene eingesetzt ist, ohne diese lotrechte Wandung (23) nach außen seitlich zu überragen, **dadurch gekennzeichnet, daß** die Dachplatte (10) eine Seitenwandung (22) aufweist, an welche sich ein im wesentlichen waagerecht verlaufender und nach innen abgestellter Abschnitt anschließt, der seinerseits mit der durch die Abschnitte (14) und (18) gebildeten Auflagefläche (20) korrespondiert, wobei die Dachplatte (1) über ihren nach innen abgestellten Abschnitt mit der Auflagefläche (20) und/oder über ihre Seitenwandung (22) mit der lotrechten Wandung (23) verklebt ist.

2. Dachbefestigung nach Anspruch 1, **dadurch gekennzeichnet, daß** die Dachplatte (10) einstückig ist und aus einem Leichtmetall, insbesondere Aluminium besteht.

3. Dachbefestigung nach Anspruch 1 oder 2, **dadurch gekennzeichnet, daß** die Seitenwandungen (22) der Dachplatte (10) nur durch einen mit einer Klebemasse (21) verfüllten Klebespalt (24) von der lotrechten Wandung (23) beabstandet sind.

4. Dachbefestigung nach Anspruch 3, **dadurch gekennzeichnet, daß** der Klebespalt (24) etwa 3 mm breit ist.

5. Dachbefestigung nach einem der Ansprüche 1 bis 4, **dadurch gekennzeichnet, daß** die zwischen den seitlichen Dachlängsholmen (4) und in einer Ebene mit diesen verlaufenden Karosserieabschnitte als Dachquerholme (5) in gleicher Weise wie die Dachlängsholme (4) ausgebildet sind und ebenfalls Auflageflächen (20) und lotrechte Wandungen (23) zur Befestigung der Dachplatte (10) aufweisen.

6. Dachbefestigung nach einem der Ansprüche 1 bis 5, **dadurch gekennzeichnet, daß** die Dachplatte (10) die lotrechte Wandung (23) des oberen Stahlblechs (15) in der Höhe nicht überragt.

## Claims

1. Roof connection for motor cars (1), upper bodywork portions (2) being configured as lateral, hollow section-like longitudinal roof members (4) which consist of lower and upper steel sheets fixedly attached to one another, the respective lower steel sheet (11) of the longitudinal roof members comprising a first planar portion (12) which runs into the lateral, substantially vertically extending bodywork portions (3), a second inwardly bulging portion (13) and a third planar portion (14), the respective upper steel sheet (15) of the longitudinal roof members comprising a first planar portion (16), which is attached to the first planar portion (12) of the lower steel sheet, a second outwardly bulging portion (17) which opposes the second bulging portion (13) of the lower steel sheet and forms therewith the hollow space of the longitudinal roof member (4) and a third planar portion (18) which is attached to the third planar portion (14) of the lower steel sheet and forms a bearing surface (20) therewith for a roof panel (10) sealing the bodywork at the top, the bearing surface (20) extending substantially horizontally, a substantially vertical wall (23) of the second portion (17) of the upper steel sheet being adjacent to the bearing surface (20) and the roof panel (10) being inserted into the L-shaped rail formed from this bearing surface (20) and this vertical wall (23), without outwardly laterally projecting over this vertical wall (23), **characterized in that** the roof panel (10) comprises a side wall (22), to which a substantially horizontally extending and inwardly oriented portion is attached which, in turn, corresponds to the bearing surface (20) formed by the portions (14) and (18), the roof panel (1) being adhered to the bearing surface (20) via its inwardly oriented portion and/or to the vertical wall (23) via its side wall (22).

2. Roof connection according to Claim 1, **characterized in that** the roof panel (10) is in one piece and consists of a light metal, in particular aluminium.

3. Roof connection according to Claim 1 or 2, **characterized in that** the side walls (22) of the roof panel (10) are spaced apart from the vertical wall (23) only by an adhesive gap (24) filled with an adhesive material (21).

4. Roof connection according to Claim 3, **characterized in that** the adhesive gap (24) is approximately 3 mm wide.

5. Roof connection according to any one of Claims 1 to 4, **characterized in that** the bodywork portions extending between the lateral longitudinal roof members (4) and in one plane therewith, are formed as transverse roof members (5) in the same manner as the longitudinal roof members (4) and also comprise bearing surfaces (20) and vertical walls (23) for fastening the roof panel (10).

6. Roof connection according to any one of Claims 1 to 5, **characterized in that** the roof panel (10) does not project over the height of the vertical wall (23) of the upper.steel sheet (15).

## Revendications

1. Fixation de toiture pour véhicules automobiles (1), dans laquelle des portions de carrosserie supérieures (2) sont réalisées sous forme de longerons de toit latéraux (4), de type profilés creux, qui se composent de tôles d'acier inférieure et supérieure connectées fixement l'une à l'autre, la tôle d'acier inférieure respective (11) des longerons de toit comprenant une première portion plane (12) qui débouche dans les portions de carrosserie (3.) latérales s'étendant essentiellement verticalement, une deuxième portion (13) bombée vers l'intérieur, et une troisième portion plane (14), la tôle d'acier supérieure respective (15) des longerons de toit comprenant une première portion plane (16), qui est connectée à la première portion plane (12) de la tôle d'acier inférieure, une deuxième portion (17) bombée vers l'extérieur, qui est opposée à la deuxième portion bombée (13) de la tôle d'acier inférieure et qui forme avec celle-ci l'espace creux du longeron de toit (4), et une troisième portion plane (18), qui est connectée à la troisième portion plane (14) de la tôle d'acier inférieure et qui forme avec celle-ci une face d'appui (20) pour une plaque de toit (10) terminant la carrosserie vers le haut, la face d'appui (20) s'étendant essentiellement horizontalement, une paroi (23) essentiellement verticale de la deuxième portion (17) de la tôle d'acier supérieure étant adjacente à la face d'appui (20) et la plaque de toit (10) étant insérée dans le rail en forme de L formé à partir de cette face d'appui (20) et de cette paroi verticale (23), sans dépasser latéralement vers l'extérieur au-delà de cette paroi verticale (23), **caractérisée en ce que** la plaque de toit (10) présente une paroi latérale (22) à laquelle se raccorde une portion s'étendant essentiellement horizontalement et arrêtée vers l'intérieur, qui correspond pour sa part à la face d'appui (20) formée par les portions (14) et (18), la plaque de toit (10) étant collée par sa portion arrêtée vers l'intérieur à la face d'appui (20) et/ou, par sa paroi latérale (22), à la paroi verticale (23).

2. Fixation de toit selon la revendication 1, **caractérisée en ce que** la plaque de toit (10) est réalisée d'une seule pièce et se compose d'un métal léger, en particulier d'aluminium.

3. Fixation de toit selon la revendication 1 ou 2, **caractérisée en ce que** les parois latérales (22) de la plaque de toit (10) ne sont espacées de la paroi verticale (23) que par un interstice de collage (24) rempli d'une composition adhésive (21).

4. Fixation de toit selon la revendication 3, **caractérisée en ce que** l'interstice de collage (24) mesure environ 3 mm de large.

5. Fixation de toit selon l'une quelconque des revendications 1 à 4, **caractérisée en ce que** les portions de carrosserie s'étendant entre les longerons de toit latéraux (4) et dans un même plan avec ceux-ci sont réalisées sous forme de traverses de toit (5) de la même manière que les longerons de toit (4) et présentent également des faces d'appui (20) et des parois verticales (23) pour la fixation de la plaque de toit (10).

6. Fixation de toit selon l'une quelconque des revendications 1 à 5, **caractérisée en ce que** la plaque de toit (10) ne dépasse pas en hauteur de la paroi verticale (23) de la tôle d'acier supérieure (15).
